# EUROPEAN PATENT APPLICATION

(11) **EP 4 737 343 A1**
(43) Date of publication of application: **06.05.2026**
(21) Application number: 23952914.2
(22) Date of filing: 08.12.2023
(51) Int. Cl.: B65D 19/44, B65D 85/88, B65D 41/00

(54) **CARRYING AND TRANSFERRING DEVICE, CARRYING METHOD, AND BATTERY PRODUCTION SYSTEM**

(30) Priority: 21.09.2023 CN 202311219355
(71) Applicant: Contemporary Amperex Technology Co., Limited, Ningde, Fujian 352100 (CN)
(72) Inventor: WU, Kai, Ningde, Fujian 352100 (CN); LIU, Yuwen, Ningde, Fujian 352100 (CN); WANG, Wenchong, Ningde, Fujian 352100 (CN); XIE, Wenjie, Ningde, Fujian 352100 (CN)
(74) Representative: Ran, Handong
(86) International application number: PCT/CN2023/137342
(87) International publication number: WO 2025/060270

(57) **Abstract**

A carrying and transferring device, a carrying method, and a battery production system. The carrying and transferring device comprises: a support plate (1); a first abutting member (2), arranged on the support plate (1) and configured to abut against a first side of an object (200) to be carried; a second abutting member (3), movably arranged on the support plate (1) and configured to abut against a second side of said object (200); and a first power assembly (4), configured to drive the second abutting member (3) to move so as to adjust the distance between the second abutting member (3) and the first abutting member (2).

## Description

### CROSS-REFERENCE TO RELATED APPLICATION

The present application claims priority to Chinese patent application 202311219355.5 entitled "PALLETIZING AND TRANSFERRING APPARATUS, PALLETIZING METHOD, AND BATTERY PRODUCTION SYSTEM" and filed on September 21, 2023, the entire contents of which are incorporated herein by reference.

### TECHNICAL FIELD

The present application relates to the technical field of batteries, in particular to a palletizing and transferring apparatus, a palletizing method, and a battery production system.

### BACKGROUND

In some related arts, when a battery module needs to be transferred, the battery module is placed on a pallet, and the battery module is fixed to the pallet through a manual operation, resulting in low transferring efficiency.

### SUMMARY OF THE INVENTION

Some embodiments of the present application provide a palletizing and transferring apparatus, a palletizing method, and a battery production system to alleviate the problem that the transferring efficiency is low.

Some embodiments of the present application further provide a palletizing and transferring apparatus, including:
a support plate;
a first abutting member, arranged on the support plate and configured to abut against a first side of an object to be palletized;
a second abutting member, movably arranged on the support plate and configured to abut against a second side of the object to be palletized; and
a first power assembly, configured to drive the second abutting member to move so as to adjust spacing between the second abutting member and the first abutting member.

When it is necessary to palletize and transfer the object to be palletized, the object to be palletized is placed on the support plate, and the first abutting member abuts against the first side of the object to be palletized. The second abutting member is driven to move by the first power assembly, and the spacing between the second abutting member and the first abutting member is adjusted, so that the second abutting member abuts against the second side of the object to be palletized to fix the object to be palletized and prevent the object to be palletized from colliding, deforming, falling off, etc. during a palletizing and transferring process. In addition, the second abutting member is driven to move by the first power assembly, the spacing between the second abutting member and the first abutting member is adjusted, so that the object to be palletized can be automatically fixed, and the transferring efficiency can be improved.

In some embodiments, the palletizing and transferring apparatus further includes a first transmission member arranged on the support plate. The first transmission member is detachably connected to the first power assembly, and the first transmission member is configured to transmit power provided by the first power assembly to the second abutting member to cause the second abutting member to move.

The first transmission member is detachably connected to the first power assembly. When the spacing between the second abutting member and the first abutting member needs to be adjusted, the first power assembly is connected to the first transmission member. The first transmission member transmits the power provided by the first power assembly to the second abutting member to cause the second abutting member to move, thereby achieving the purpose of adjusting the distance between the second abutting member and the first abutting member and realizing the fixation of the object to be palletized.

When the object to be palletized is fixed, or in other cases where there is no need to adjust the spacing between the second abutting member and the first abutting member, the connection between the first power assembly and the first transmission member is released. This can not only prevent the first power assembly from being operated incorrectly to cause the first transmission member to move, but also facilitate the support plate carrying the object to be palletized for transferring without the need for the first power assembly to follow the support plate for transferring.

In some embodiments, the palletizing and transferring apparatus further includes a second power assembly, which is connected to the first power assembly in a driving mode so as to cause the first power assembly to move toward or away from the first transmission member.

The first power assembly moves toward the first transmission member, which can realize the connection between the first power assembly and the first transmission member. The first power assembly moves away from the first transmission member, which can realize the release of the connection between the first power assembly and the first transmission member. By driving the first power assembly to move toward or away from the first transmission member by the second power assembly, a position of the first power assembly can be automatically adjusted, thereby improving the transferring efficiency.

In some embodiments, the palletizing and transferring apparatus further includes a connecting assembly. The connecting assembly is configured to realize a connection or disconnection between the first transmission member and the first power assembly.

The connection or disconnection between the first transmission member and the first power assembly is realized through the connecting assembly, without the need for a manual operation for the connection, thereby improving the transferring efficiency.

In some embodiment, the connecting assembly includes:
a first joint, including a connecting member and an extending member, wherein the connecting member is connected to the first transmission member, and the extending member is connected to the connecting member and extends toward the outside of the connecting member; and
a second joint, connected to the first power assembly, wherein the second joint includes an accommodating cavity formed by a circumferential side wall in a surrounded mode and configured to accommodate the connecting member, and the circumferential side wall includes an accommodating groove for accommodating the extending member.

When the first power assembly moves toward the first transmission member, the connecting member of the first joint enters the accommodating cavity of the second joint, and the extending member of the first joint enters the accommodating groove of the second joint. The accommodating groove limits the extending member, and the first joint and the second joint are connected, thereby realizing the connection between the first power assembly and the first transmission member. The first power assembly provides power to drive the second joint to rotate, the accommodating groove pushes the extending member to rotate, the extending member drives the first joint to rotate, and the first joint drives the first transmission member to rotate.

When the first power assembly stops working and moves in a direction away from the first transmission member, the connecting member of the first joint detaches from the accommodating cavity of the second joint, the extending member of the first joint detaches from the accommodating groove of the second joint, the first joint and the second joint are disconnected, and then the connection between the first power assembly and the first transmission member is released.

In some embodiments, the palletizing and transferring apparatus further includes a limiting assembly, the limiting assembly is configured to limit a movement of the first transmission member when the first transmission member is disconnected from the first power assembly, and to release a limitation on the first transmission member after the first transmission member is connected to the first power assembly.

After the first transmission member is disconnected from the first power assembly, the movement of the first transmission member is limited by the limiting assembly, which can prevent the first transmission member from driving the second abutting member to move, causing the second abutting member to be unable to effectively abut against and limit the object to be palletized, causing the object to be palletized to shake, collide or fall off, etc. After the first transmission member is connected to the first power assembly, the limitation on the first transmission member is released by the limiting assembly, so that the first power assembly can normally drive the first transmission member to move.

In some embodiments, the limiting assembly includes:
a first limiting member, arranged on the first transmission member; and
a second limiting member, movably arranged relative to the first limiting member, wherein the second limiting member is configured to move toward the first limiting member to limit the first limiting member, or move away from the first limiting member to release limiting on the first limiting member.

The first limiting member is arranged on the first transmission member, and moves toward the first limiting member by the second limiting member to make contact with the first limiting member and limit the first limiting member, or moves away from the first limiting member by the second limiting member to release the limiting on the first limiting member, and a limiting operation is convenient.

In some embodiments, the first limiting member includes a ratchet.

The ratchet is arranged on the first transmission member, does not occupy a lot of space, and does not hinder the arrangement of the connecting assembly.

In some embodiments, the second limiting member includes a limiting plate, and the limiting plate is configured to move toward the ratchet and be inserted into a tooth groove of the ratchet.

The limiting plate is inserted into the tooth groove of the ratchet, which can limit the rotation of the ratchet and then prevent the first transmission member from moving.

In some embodiments, the palletizing and transferring apparatus further includes a reset member, the reset member is connected to the second limiting member, and the reset member is configured to provide an acting force that causes the second limiting member to move toward the first limiting member.

The reset member provides the force that causes the second limiting member to move toward the first limiting member, and can prevent the second limiting member from detaching from the first limiting member when the second limiting member and the first limiting member are in a limiting state, thereby improving a limiting effect.

In some embodiments, the palletizing and transferring apparatus further includes a third power assembly, and the third power assembly is configured to drive the second limiting member to move.

The third power assembly drives the second limiting member to move toward the first limiting member, so that the second limiting member makes contact with the first limiting member to limit the first limiting member, or the third power assembly drives the second limiting member away from the first limiting member to release the limiting on the first limiting member. A degree of automation is high, and the transferring efficiency can be improved.

In some embodiments, the palletizing and transferring apparatus further includes a first pushing member arranged on the second limiting member, the third power assembly includes a second pushing member, and the second pushing member is configured to push the first pushing member to move so as to drive the second limiting member away from the first limiting member.

The second pushing member pushes the first pushing member to move, and the first pushing member drives the second limiting member to move, so that the second limiting member moves away from the first limiting member, thereby releasing the limiting of the second limiting member on the first limiting member.

In some embodiments, the second pushing member includes an inclined surface, which includes a start end where an inclination starts and an end point end where the inclination ends, and the inclined surface is configured to abut against the first pushing member in a direction from the start end to the end point end so as to push the first pushing member to move in a direction away from the first limiting member.

The start end of the inclined surface has a small size in a direction from the first limiting member to the second limiting member, and the end point end of the inclined surface has a large size in a direction from the first limiting member to the second limiting member. The second pushing member extends out in a direction from the end point end to the start end, and the inclined surface makes contact with the first pushing member in a direction from the start end to the end point end, and can push the first pushing member to move in the direction away from the first limiting member.

In some embodiments, the palletizing and transferring apparatus further includes a reset member, the reset member is connected to the second limiting member, and the reset member is configured to provide an acting force that causes the second limiting member to move toward the first limiting member.

When a pushing force of the second pushing member on the first pushing member disappears, the second limiting member moves toward the first limiting member under the acting force of the reset member, thereby realizing the limiting of the second limiting member and the first limiting member.

In some embodiments, the palletizing and transferring apparatus further includes:
a mounting plate, provided with the first power assembly and the third power assembly are arranged; and
a second power assembly, connected to the mounting plate in a driving mode so as to cause the mounting plate to move toward or away from the support plate.

The second power assembly drives the mounting plate to move toward or away from the support plate, with a high degree of automation, and the mounting plate is provided with the first power assembly and the third power assembly. The mounting plate can simultaneously drive the first power assembly and the third power assembly to move toward the support plate, which is used to realize the connection between the first power assembly and the first transmission member, and realize that the third power assembly provides power, so that the second pushing member pushes the first pushing member, the second limiting member and the first limiting member are released from limiting, and the first power assembly can normally drive the first transmission member to move.

In some embodiments, two sides of the first abutting member are each provided with one second abutting member.

The first abutting member can abut against and fix, together with the second abutting member on one side thereof, a group of objects to be palletized, and the first abutting member can also abut against and fix, together with the second abutting member on the other side thereof, another group of objects to be palletized, which can simplify a structure, increase the palletized number of objects to be palletized, and improve the transferring efficiency.

In some embodiments, the palletizing and transferring apparatus further includes:
a third abutting member, arranged on the support plate and configured to abut against a third side of the object to be palletized;
a fourth abutting member, movably arranged on the support plate and configured to abut against a fourth side of the object to be palletized; and
a fourth power assembly, configured to drive the fourth abutting member to move so as to adjust spacing between the fourth abutting member and the third abutting member.

The fourth abutting member is movably arranged on the support plate, and the distance between the fourth abutting member and the third abutting member can be adjusted, so that it is suitable for abutting against and fixing objects to be palletized of different models and specifications. Furthermore, by adjusting the spacing between the fourth abutting member and the third abutting member through the fourth power assembly, the object to be palletized can be automatically fixed, thereby improving the transferring efficiency.

In some embodiments, the fourth abutting member is movably arranged on the first abutting member, and the fourth abutting member is configured to abut against fourth sides of objects to be palletized placed on two sides of the first abutting member.

A third abutting member is arranged on the first abutting member and one end of the second abutting member on one side thereof. A third abutting member is also arranged on the first abutting member and one end of the second abutting member on the other side thereof. The fourth abutting member can abut against the fourth sides of the objects to be palletized placed on two sides of the first abutting member. The structure is simple and compact, the operation is convenient, and the transferring efficiency is improved.

Some embodiments of the present application further provide a battery production system, including the above palletizing and transferring apparatus.

The battery production system includes the palletizing and transferring apparatus in any of the above embodiments, and accordingly has beneficial effects of the palletizing and transferring apparatus.

In some embodiments, the battery production system further includes:
a conveyor line, configured to convey the support plate; and
a loading station, arranged on the conveyor line, wherein the loading station is laterally provided with the first power assembly.

The support plate is conveyed through the conveyor line. After the support plate arrives at the loading station, the object to be palletized is placed on the support plate, and the first abutting member is configured to abut against the first side of the object to be palletized. The spacing between the second abutting member and the first abutting member is adjusted by the first power assembly, so that the second abutting member abuts against the second side of the object to be palletized. This can automatically fix the object to be palletized and improve the transferring efficiency. After the object to be palletized is fixed, the first power assembly moves away from the support plate, and the support plate carries the object to be palletized and is conveyed to a next process through the conveyor line.

In some embodiments, the palletizing and transferring apparatus further includes:
a third abutting member, arranged on the support plate and configured to abut against a third side of the object to be palletized;
a fourth abutting member, movably arranged on the support plate and configured to abut against a fourth side of the object to be palletized; and
a fourth power assembly, configured to drive the fourth abutting member to move so as to adjust spacing between the fourth abutting member and the third abutting member.

The first power assembly is arranged on one side of the conveyor line, the fourth power assembly is located in a conveying direction of the conveyor line, and the fourth power assembly is arranged in a rising and falling mode relative to the conveyor line.

The fourth power assembly is arranged in the rising and falling mode relative to the conveyor line. During a process that the conveyor line conveys the support plate, the fourth power assembly rises above the conveyor line to avoid interfering with the operation of the support plate. After the support plate arrives at the loading station, the fourth power assembly falls to the conveyor line to drive and adjust the fourth abutting member.

In some embodiments, the object to be palletized includes a battery module or a battery.

The palletizing and transferring apparatus can be applied to different objects to be palletized.

Some embodiments of the present disclosure further provide a palletizing method for a palletizing and transferring apparatus, including the following steps:
placing an object to be palletized on a support plate;
abutting against a first side of the object to be palletized by a first abutting member; and
driving a second abutting member to move by a first power assembly so as to adjust spacing between the second abutting member and the first abutting member, so that the second abutting member abuts against a second side of the object to be palletized.

When it is necessary to palletize and transfer the object to be palletized, the object to be palletized is placed on the support plate, and the first abutting member abuts against the first side of the object to be palletized. The spacing between the second abutting member and the first abutting member is adjusted by the first power assembly, so that the second abutting member abuts against the second side of the object to be palletized to fix the object to be palletized and prevent the object to be palletized from colliding, deforming, falling off, etc. during a palletizing and transferring process. Furthermore, by adjusting the spacing between the second abutting member and the first abutting member through the first power assembly, the object to be palletized can be automatically fixed, thereby improving the transferring efficiency.

In some embodiments, adjusting the spacing between the second abutting member and the first abutting member by the first power assembly includes:
driving the first power assembly to move toward a first transmission member by a second power assembly, so that the first power assembly is connected to the first transmission member; and

The power provided by the first power assembly is transmitted to the second abutting member by the first transmission member, so that the second abutting member moves.

When the spacing between the second abutting member and the first abutting member needs to be adjusted, the first power assembly is connected to the first transmission member. The first transmission member transmits the power provided by the first power assembly to the second abutting member to cause the second abutting member to move, thereby achieving the purpose of adjusting the distance between the second abutting member and the first abutting member and realizing the fixation of the object to be palletized.

When the object to be palletized is fixed, or in other cases where there is no need to adjust the spacing between the second abutting member and the first abutting member, the connection between the first power assembly and the first transmission member is released. This can not only prevent the first power assembly from being operated incorrectly to cause the first transmission member to move, but also facilitate the support plate carrying the object to be palletized for transferring without the need for the first power assembly to follow the support plate for transferring.

In some embodiments, the palletizing method for the palletizing and transferring apparatus further includes:
driving the first power assembly to move in a direction away from the first transmission member by the second power assembly, so that the first power assembly is disconnected from the first transmission member; limiting a movement of the first transmission member by a limiting assembly; and operating the limiting assembly to release a limitation on the first transmission member when the first power assembly is connected to the first transmission member.

After the first transmission member is disconnected from the first power assembly, the movement of the first transmission member is limited by the limiting assembly, which can prevent the first transmission member from driving the second abutting member to move, causing the second abutting member to be unable to effectively abut against and limit the object to be palletized, causing the object to be palletized to shake, collide or fall off, etc. The limiting assembly is operated to release a limitation on the first transmission member when the first power assembly is connected to the first transmission member, so that the first power assembly normally drive the first transmission member to move.

### BRIEF DESCRIPTION OF THE DRAWINGS

In order to explain technical solutions of the examples of the present application more clearly, a brief introduction of drawings to be used in the examples of the present application will be made below. Apparently, the drawings described below are merely some examples of the present application, and other drawings can be obtained according to these drawings by those ordinarily skilled in the art without creative efforts.
FIG. 1 is a schematic diagram of a disassembled structure of a battery disclosed in some embodiments of the present application;
FIG. 2 is a schematic diagram of a support plate palletizing objects to be palletized disclosed in some embodiments of the present application;
FIG. 3 is a schematic structural diagram of a palletizing and transferring apparatus disclosed in some embodiments of the present application;
FIG. 4 is a top view of a palletizing and transferring apparatus disclosed in some embodiments of the present application;
FIG. 5 is a schematic diagram of a first power assembly, a second power assembly, and a third power assembly integrally arranged and connected to a first transmission member disclosed in some embodiments of the present application;
FIG. 6 is an enlarged schematic diagram of a local structure in FIG. 5;
FIG. 7 is a schematic diagram of a second abutting member disclosed in some embodiments of the present application;
FIG. 8 is an enlarged schematic diagram of a local structure in FIG. 7;
FIG. 9 is a schematic diagram of a first power assembly and a third power assembly integrally arranged and connected to a first transmission member disclosed in some embodiments of the present application;
FIG. 10 is an enlarged schematic diagram of a local structure in FIG. 9;
FIG. 11 is a schematic diagram of a fourth abutting member connected to a fourth power assembly disclosed in some embodiments of the present application;
FIG. 12 is an enlarged schematic diagram of a local structure in FIG. 11;
FIG. 13 is an enlarged schematic diagram of a local structure A in FIG. 3; and
FIG. 14 is a simplified schematic diagram of a conveyor line disclosed in some embodiments of the present application.

In accompanying drawings, the accompanying drawings are not drawn according to the actual scale.

Marking instructions: 1-support plate; 11-first guide rail; 12-second guide rail; 2-first abutting member; 3-second abutting member; 4-first power assembly; 41-first power member; 411-servo motor; 5-first transmission member; 6-second power assembly; 61-second power member; 7-connection assembly; 71-first joint; 711-connecting member; 712-extending member; 72-second joint; 721-circumferential side wall; 722-accommodating cavity; 723-accommodating groove; 8-limiting assembly; 81-first limiting member; 811-ratchet; 82-second limiting member; 821-limiting plate; 9-reset member; 10-third power assembly; 10a-third power member; 101-second pushing member; 1011-inclined surface; 1012-start end; 1013-end point end; 102-slider; 103-third guide rail; 20-first pushing member; 30-mounting plate; 40-third abutting member; 50-fourth abutting member; 60-bottom plate; 70-fourth power assembly; 80-second transmission member; 100-battery; 200-object to be palletized; 200a-battery module; 300-housing assembly; 300a-box body; 300b-cover body; 400-conveyor line; and 500-loading station.

### DETAILED DESCRIPTION

The implementations of the present application are further described in detail below with reference to the accompanying drawings and embodiments. The following detailed description of the embodiments and the accompanying drawings are used to illustrate the principles of the present application by way of example, but should not be used to limit the scope of the present application, that is, the present application is not limited to the described embodiments.

In the description of the present application, it needs to be noted that unless otherwise specified, "plurality of" means two or more; and the directions or position relationships indicated by the terms "above", "below", "left", "right", "inner", "outer", etc., are only provided to facilitate the description of the present application and simplify the description, rather than indicating or implying that the apparatus or element referred to must have a specific direction, or be constructed and operated in a specific direction, and therefore cannot be construed as limiting the present application. In addition, the terms such as "first," "second" and "third" are only for the purpose of description, and shall not be construed as indicating or implying relative importance. "Vertical" is not vertical in the strict sense, but is within the margin of error allowed. "Parallel" is not parallel in the strict sense, but is within the margin of error allowed.

Orientation words appearing in the following description all indicate directions shown in the drawings, and do not limit the specific structure of the present application. In the description of the present application, it needs to be further noted that, unless otherwise expressly specified and limited, terms "mounted," "connected," and "connection" should be understood in a broad sense, for example, as a fixed connection, as a detachable connection, or as an integral connection; and as a direct connection, as an indirect connection through an intermediate medium. For those of ordinary skill in the art, the specific meanings of the above terms in the present application may be understood according to specific circumstances.

With the vigorous promotion of new energy vehicles, new energy batteries have been widely developed. In order to improve the efficiency of battery assembly, all battery assembly work is generally performed on an assembly line. The battery assembly process includes the circulation of battery modules. During the circulation process, the battery modules need to be placed on pallets and palletized and transferred by the pallets. In order to prevent the battery modules from colliding, deforming, or falling off during the circulation process, some related arts use manual operations to fix the battery modules to the pallets, which is labor-intensive and has low transferring efficiency.

Based on this, some embodiments of the present application provide a palletizing and transferring apparatus, a palletizing method, and a battery production system to alleviate the problem that the transferring efficiency is low.

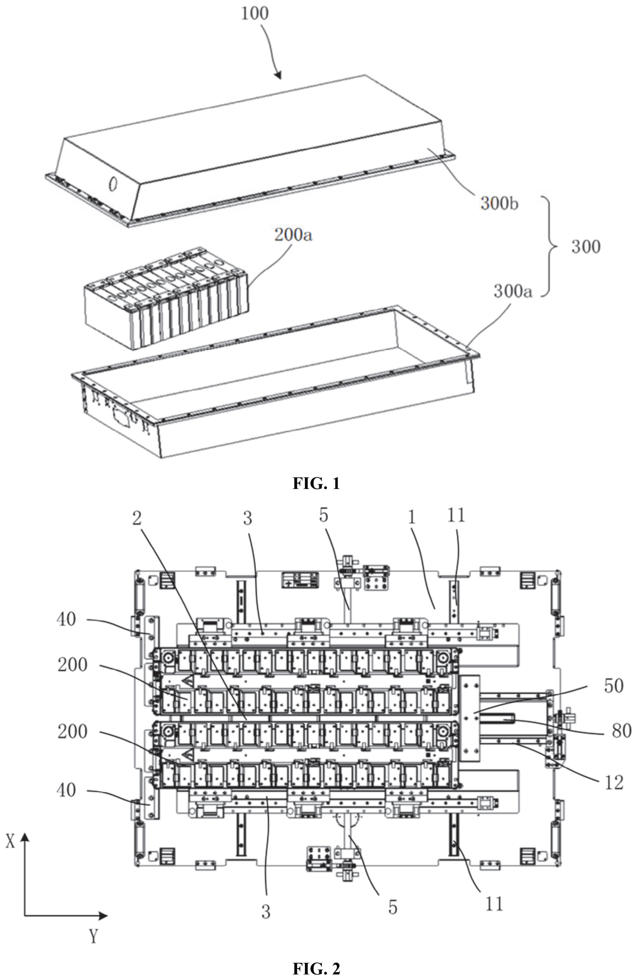

Referring to FIG. 1, in some embodiments, a battery 100of the present application includes a housing assembly 300 and at least one battery module 200 a. The interior of the housing assembly 300 is of a hollow structure, and at least one battery module 200 a is accommodated in the housing assembly 300. The housing assembly 300 may include two portions, referred to herein as a box body 300a and a cover body 300b respectively. The box body 300a and the cover body 300b are arranged opposite to each other and buckled together to form a box body with a closed cavity. The at least one battery module 200a includes more than two of the plurality of battery modules 200a, and the plurality of battery modules 200a may be connected in series or in parallel or in mixed connection, the mixed connection being a mixture of series and parallel connections. After the plurality of battery module 200a are connected in parallel or in series or in a mixed connection combination, they are placed in the closed cavity formed after the box body 300a and the cover body 300b are buckled together.

The battery 100 of the present application may be configured for an electrical apparatus and may provide electrical energy to the electrical apparatus. The electrical apparatus may be a mobile phone, a portable device, a laptop, an electro mobile, an electric vehicle, a ship, a spacecraft, an electric toy, an electric tool, and the like. The spacecraft may include an aircraft, a rocket, space shuttles, a spaceship, and the like. The electric toy includes a fixed electric toy or a mobile electric toy, such as a game machine, an electric vehicle toy, an electric ship toy, an electric aircraft toy, and the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer.

The electrical apparatus of the present application may be a vehicle, such as a new energy vehicle. The new energy vehicle may be an all-electric vehicle, a hybrid vehicle, or an extended-range vehicle, or the like. Or, the electrical apparatus may also be a drone or a ship, etc.

Referring to FIG. 2 to FIG. 4, some embodiments provide a palletizing and transferring apparatus, including a support plate 1, a first abutting member 2 , a second abutting member 3 and a first power assembly 4. The first abutting member 2 is arranged on the support plate 1 and configured to abut against a first side of an object to be palletized 200. The second abutting member 3 is movably arranged on the support plate 1 and configured to abut against a second side of the object to be palletized 200. The first power assembly 4 is configured to drive the second abutting member 3 to move so as to adjust spacing between the second abutting member 3 and the first abutting member 2.

When it is necessary to palletize and transfer the object to be palletized 200, the object to be palletized 200 is placed on the support plate 1, and the first abutting member 2 abuts against the first side of the object to be palletized 200. The second abutting member 3 is driven to move by the first power assembly 4, and the spacing between the second abutting member 3 and the first abutting member 2 is adjusted, so that the second abutting member 3 abuts against the second side of the object to be palletized 200 to fix the object to be palletized 200 and prevent the object to be palletized 200 from colliding, deforming, falling off, etc. during a palletizing and transferring process. In addition, the second abutting member 3 is driven to move by the first power assembly 4, the spacing between the second abutting member 3 and the first abutting member 2 is adjusted, so that the object to be palletized 200 can be automatically fixed, and the transferring efficiency can be improved.

A direction from the first abutting member 2 to the second abutting member 3 is parallel to a first direction X. A second direction Y intersects the first direction X.

Optionally, the second direction Y is perpendicular to the first direction X.

In some embodiments, the first power assembly 4 includes a first power member 41 and a related transmission assembly.

The first power member 41 includes an electric power member, a hydraulic power member or a pneumatic power member.

The electric power member, the hydraulic power member or the pneumatic power member can automatically drive the second abutting member 3 to move, adjust the spacing between the second abutting member 3 and the first abutting member 2, realize automatic fixation of the object to be palletized 200, and improve the transferring efficiency.

In some embodiments, the electric power member includes a motor. The motor includes a stepper motor or a servo motor.

In some embodiments, the first power member 41 includes a servo motor 411.

The servo motor 411 has accurate speed control and position control, and responds quickly, and can realize servo automatic distance change between the second abutting member 3 and the first abutting member 2.

When the model and size of the object to be palletized 200 are determined, after the servo motor 411 successfully fixes one object to be palletized 200, a position and movement speed of the second abutting member 3 corresponding to the angular displacement or angular speed output of the servo motor can be recorded. For a subsequent object to be palletized 200, the servo motor can accurately control the position and movement speed of the second abutting member 3 according to the above records, thereby realizing successful fixation of the object to be palletized 200, without repeatedly adjusting the position of the second abutting member 3, thus improving the palletizing and transferring efficiency.

When the model of the object to be palletized 200 is changed, after the servo motor 411 successfully fixes one object to be palletized 200, a position and movement speed of the second abutting member 3 corresponding to the angular displacement or angular speed output of the servo motor can be recorded. For a subsequent object to be palletized 200, the servo motor can accurately control the position and movement speed of the second abutting member 3 according to the above records, thereby realizing successful fixation of the object to be palletized 200, without repeatedly adjusting the position of the second abutting member 3, automatic spacing change can be realized, and a range of compatible items is large, which improves the efficiency of quick model change and the palletizing and transferring efficiency.

In some embodiments, the first power assembly 4 is operably connected to the second abutting member 3.

In some embodiments, the palletizing and transferring apparatus further includes a first transmission member 5 arranged on the support plate 1, the first transmission member 5 is detachably connected to the first power assembly 4, and the first transmission member 5 is configured to transmit power provided by the first power assembly 4 to the second abutting member 3 to cause the second abutting member 3 to move.

The first transmission member 5 is detachably connected to the first power assembly 4. When the spacing between the second abutting member 3 and the first abutting member 2 needs to be adjusted, the first power assembly 4 is connected to the first transmission member 5. The first transmission member 5 transmits the power provided by the first power assembly 4 to the second abutting member 3 to cause the second abutting member 3 to move, thereby achieving the purpose of adjusting the distance between the second abutting member 3 and the first abutting member 2 and realizing the fixation of the object to be palletized 200.

When the object to be palletized 200 is fixed, or in other cases where there is no need to adjust the spacing between the second abutting member 3 and the first abutting member 2, the connection between the first power assembly 4 and the first transmission member 5 is released. This can not only prevent the first power assembly 4 from being operated incorrectly to cause the first transmission member 5 to move, but also facilitate the support plate 1 carrying the object to be palletized 200 for transferring without the need for the first power assembly 4 to follow the support plate 1 for transferring.

In some embodiments, the second abutting member 3 is movably arranged on the first transmission member 5 , and the first transmission member 5 transmits the power provided by the first power assembly 4 to the second abutting member 3, so that the second abutting member 3 moves along the first transmission member 5.

In some embodiments, the first transmission member 5 includes a lead screw. Optionally, the lead screw includes a trapezoidal lead screw.

In some embodiments, the first transmission member 5 is arranged on the support plate 1, and an extending direction of the first transmission member 5 is consistent with the direction from the second abutting member 3 to the first abutting member 2.

In some embodiments, the extending direction of the first transmission member 5 is parallel to the first direction X.

In some embodiments, the palletizing and transferring apparatus further includes a first guide rail 11, which is arranged on the support plate 1, and an extending direction of the first guide rail 11 is consistent with the extending direction of the first transmission member 5. The second abutting member 3 is slidably arranged on the first guide rail 11. The first transmission member 5 transmits the power provided by the first power assembly 4 to the second abutting member 3, so that the second abutting member 3 moves along the first transmission member 5, and the movement of the second abutting member 3 is guided by the first guide rail 11.

In some embodiments, two sides of the first transmission member 5 are each provided a first guide rail 11. The second abutting member 3 is arranged on the first transmission member 5 and the two first guide rails 11. The first transmission member 5 transmits the power provided by the first power assembly 4 to the second abutting member 3, so that the second abutting member 3 moves along the first transmission member 5 and the two first guide rails 11.

In some embodiments, the first guide rail 11 includes a linear guide rail.

In some embodiments, the extending direction of the first guide rail 11 is parallel to the first direction X.

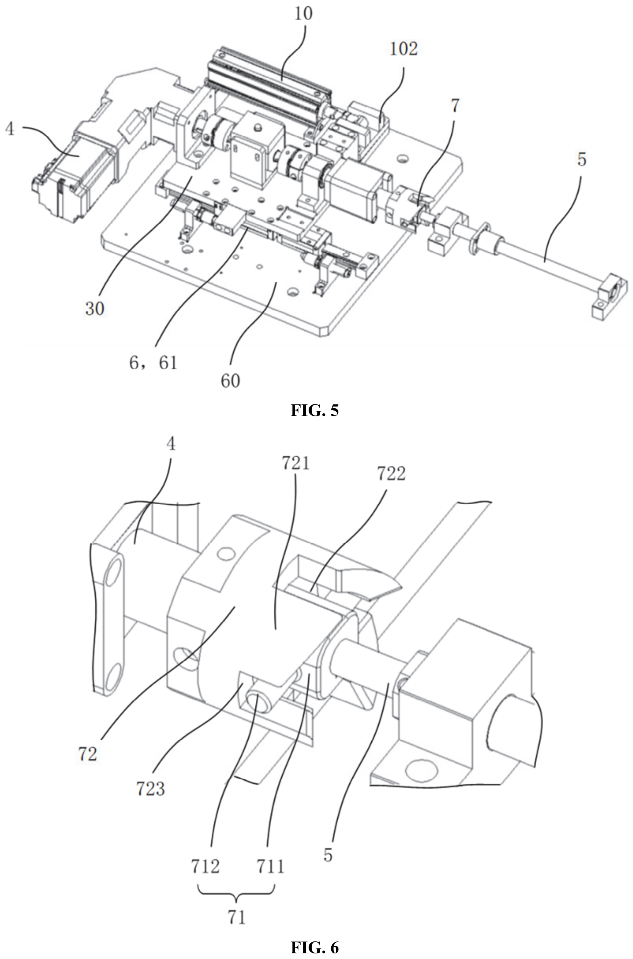

Referring to FIG. 5, in some embodiments, the palletizing and transferring apparatus further includes a second power assembly 6, which is connected to the first power assembly 4 in a driving mode so as to cause the first power assembly 4 to move toward or away from the first transmission member 5.

The first power assembly 4 moves toward the first transmission member 5, which can realize the connection between the first power assembly 4 and the first transmission member 5. The first power assembly 4 moves away from the first transmission member 5, which can realize the release of the connection between the first power assembly 4 and the first transmission member 5. By driving the first power assembly 4 to move toward or away from the first transmission member 5 by the second power assembly 6, a position of the first power assembly 4 can be automatically adjusted, thereby improving the transferring efficiency.

In some embodiments, the second power assembly 6 includes a second power member 61 and a related transmission assembly.

In some embodiments, the second power member 61 includes an air cylinder, an oil cylinder, or a linear motor, etc. Optionally, the linear motor includes a linear servo motor.

In some embodiments, a direction in which the first power assembly 4 moves toward the first transmission member 5 is parallel to the first direction X.

Referring to FIG. 5 and FIG. 6, in some embodiments, the palletizing and transferring apparatus further includes a connecting assembly 7. The connecting assembly 7 is configured to realize a connection or disconnection between the first transmission member 5 and the first power assembly 4.

The connection or disconnection between the first transmission member 5 and the first power assembly 4 is realized through the connecting assembly 7, without the need for a manual operation for the connection, thereby improving the transferring efficiency.

In some embodiments, the connecting assembly 7 includes a first joint 71. The first joint 71 includes a connecting member 711 and an extending member 712. The connecting member 711 is connected to the first transmission member 5, and the extending member 712 is connected to the connecting member 711 and extends toward the outside of the connecting member 711.

The connecting assembly 7 includes a second joint 72. The second joint 72 is connected to the first power assembly 4. The second joint 72 includes an accommodating cavity 722 formed by a circumferential side wall 721 in a surrounded mode and configured to accommodate the connecting member 711, and the circumferential side wall 721 includes an accommodating groove 723 for accommodating the extending member 712.

When the first power assembly 4 moves toward the first transmission member 5, the connecting member 711 of the first joint 71 enters the accommodating cavity 722 of the second joint 72, and the extending member 712 of the first joint 71 enters the accommodating groove 723 of the second joint 72. The accommodating groove 723 limits the extending member 712, and the first joint 71 and the second joint 72 are connected, thereby realizing the connection between the first power assembly 4 and the first transmission member 5. The first power assembly 4 provides power to drive the second joint 72 to rotate, the accommodating groove 723 pushes the extending member 712 to rotate, the extending member 712 drives the first joint 71 to rotate, and the first joint 71 drives the first transmission member 5 to rotate.

When the first power assembly 4 stops working and moves in a direction away from the first transmission member 5, the connecting member 711 of the first joint 71 detaches from the accommodating cavity 722 of the second joint 72, the extending member 712 of the first joint 71 detaches from the accommodating groove 723 of the second joint 72, the first joint 71 and the second joint 72 are disconnected, and then the connection between the first power assembly 4 and the first transmission member 5 is released.

An opening end of the accommodating cavity 722 of the second joint 72 faces the connecting member 711 of the first joint 71, and an opening end of the accommodating groove 723 of the second joint 72 faces the extending member 712 of the first joint 71. The connecting member 711 of the first joint 71 enters the accommodating cavity 722 of the second joint 72, and the extending member 712 of the first joint 71 enters the accommodating groove 723 of the second joint 72, thereby realizing the connection between the first joint 71 and the second joint 72. The connecting member 711 of the first joint 71 detaches from the accommodating cavity 722 of the second joint 72, and the extending member 712 of the first joint 71 detaches from the accommodating groove 723 of the second joint 72, thereby realizing the disconnection between the first joint 71 and the second joint 72. The first joint 71 and the second joint 72 are conveniently connected and disassembled, thereby enabling a quick connection and disassembly of the first power assembly 4 and the first transmission member 5, thus improving efficiency.

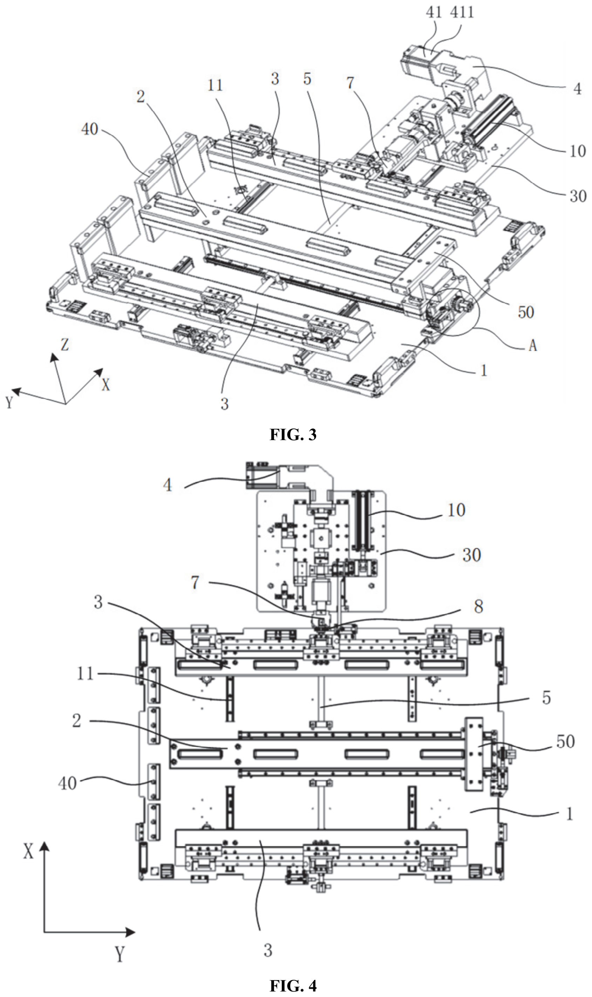

Referring to FIG. 4, and FIG. 7 to FIG. 10, in some embodiments, the palletizing and transferring apparatus further includes a limiting assembly 8, the limiting assembly 8 is configured to limit a movement of the first transmission member 5 when the first transmission member 5 is disconnected from the first power assembly 4, and to release a limitation on the first transmission member 5 after the first transmission member 5 is connected to the first power assembly 4.

After the first transmission member 5 is disconnected from the first power assembly 4, the movement of the first transmission member 5 is limited by the limiting assembly 8, which can prevent the first transmission member 5 from driving the second abutting member 3 to move, causing the second abutting member 3 to be unable to effectively abut against and limit the object to be palletized 200, causing the object to be palletized 200 to shake, collide or fall off, etc. After the first transmission member 5 is connected to the first power assembly 4, the limitation on the first transmission member 5 is released by the limiting assembly 8, so that the first power assembly 4 can normally drive the first transmission member 5 to move.

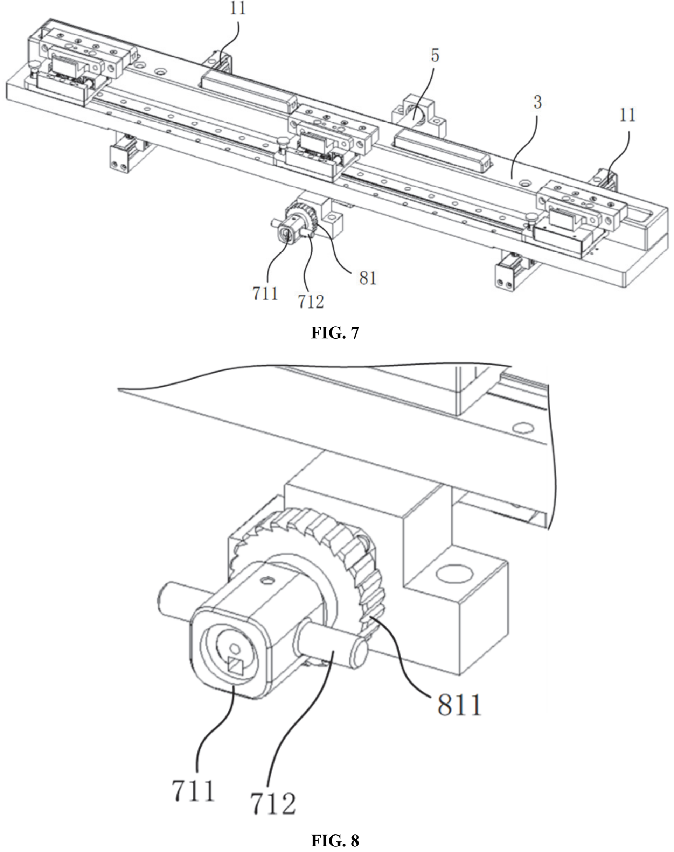

Referring to FIG. 7 and FIG. 8, in some embodiments, the limiting assembly 8 includes a first limiting member 81, and the first limiting member 81 is arranged on the first transmission member 5.

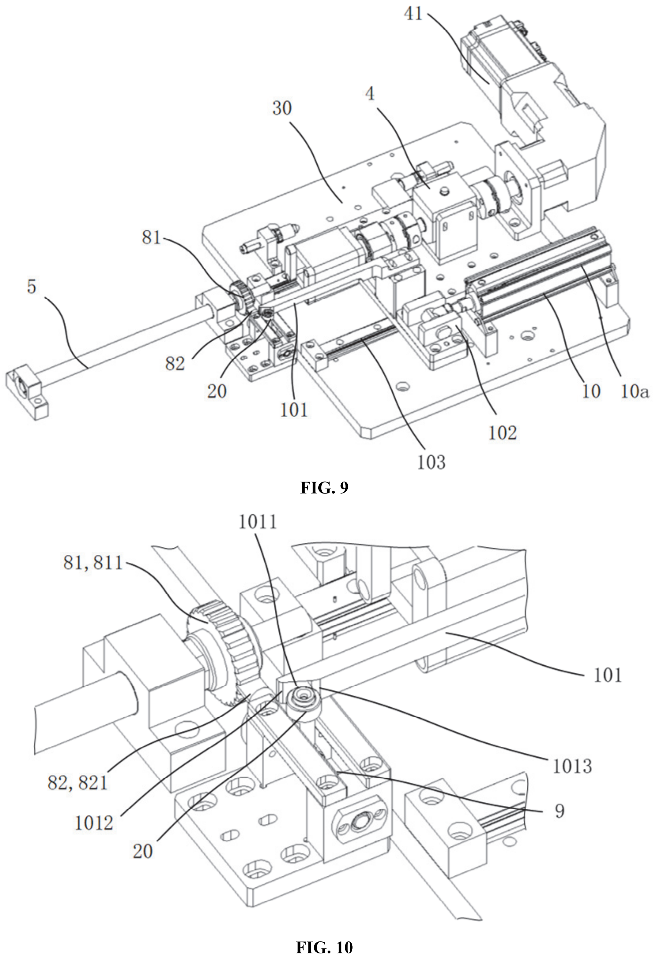

Referring to FIG. 9 and FIG. 10, the limiting assembly 8 includes a second limiting member 82, the second limiting member 82 is movably arranged relative to the first limiting member 81, the second limiting member 82 is configured to move toward the first limiting member 81 to limit the first limiting member 81, or move away from the first limiting member 81 to release limiting on the first limiting member 81.

The first limiting member 81 is arranged on the first transmission member 5, and moves toward the first limiting member 81 by the second limiting member 82 to make contact with the first limiting member 81 and limit the first limiting member 81, or moves away from the first limiting member 81 by the second limiting member 82 to release the limiting on the first limiting member 81, and a limiting operation is convenient.

In some embodiments, a direction in which the second limiting member 82 moves toward the first limiting member 81 is parallel to the second direction Y.

In some embodiments, the first limiting member 81 includes a ratchet 811. The ratchet 811 is arranged on the first transmission member 5, does not occupy a lot of space, and does not hinder the arrangement of the connecting assembly 7.

In some embodiments, the second limiting member 82 includes a limiting plate 821, and the limiting plate 821 is configured to move toward the ratchet 811 and be inserted into a tooth groove of the ratchet 811.

The limiting plate 821 is inserted into the tooth groove of the ratchet 811, which can limit the rotation of the ratchet 811 and then prevent the first transmission member 5 from moving.

In some embodiments, a part of the limiting plate 821 inserted into the tooth groove of the ratchet 811 is arranged to be in a wedge shape or a pawl shape, which can effectively limit the ratchet 811.

In some embodiments, the palletizing and transferring apparatus further includes a reset member 9, the reset member 9 is connected to the second limiting member 82, and the reset member 9 is configured to provide an acting force that causes the second limiting member 82 to move toward the first limiting member 81.

The reset member 9 provides the force that causes the second limiting member 82 to move toward the first limiting member 81, and can prevent the second limiting member 82 from detaching from the first limiting member 81 when the second limiting member 82 and the first limiting member 81 are in a limiting state, thereby improving a limiting effect.

In some embodiments, the palletizing and transferring apparatus further includes a third power assembly 10, and the third power assembly 10 is configured to drive the second limiting member 82 to move.

The third power assembly 10 drives the second limiting member 82 to move toward the first limiting member 81, so that the second limiting member 82 makes contact with the first limiting member 81 to limit the first limiting member 81, or the third power assembly 10 drives the second limiting member 82 away from the first limiting member 81 to release the limiting on the first limiting member 81. A degree of automation is high, and the transferring efficiency can be improved.

In some embodiments, the third power assembly 10 includes a third power member 10a and a corresponding transmission assembly.

In some embodiments, the third power member 10a includes an air cylinder, an oil cylinder, or a linear motor, etc. Optionally, the linear motor includes a linear servo motor.

In some embodiments, the palletizing and transferring apparatus further includes a first pushing member 20 arranged on the second limiting member 82, the third power assembly 10 includes a second pushing member 101, and the second pushing member 101 is configured to push the first pushing member 20 to move so as to make the second limiting member 82 away from the first limiting member 81.

The second pushing member 101 pushes the first pushing member 20 to move, and the first pushing member 20 drives the second limiting member 82 to move, so that the second limiting member 82 moves away from the first limiting member 81, thereby releasing the limiting of the second limiting member 82 on the first limiting member 81.

In some embodiments, a direction in which the second pushing member 101 moves toward the first pushing member 20 is parallel to the first direction X. A direction in which the second pushing member 101 pushes the first pushing member 20 to move is parallel to the second direction Y.

In some embodiments, the third power assembly 10 includes a third power member 10a and a corresponding transmission assembly. The third power member 10a is connected to the second limiting member 82 in a driving mode to cause the second limiting member 82 to move.

In some embodiments, the third power member 10a includes an air cylinder, an oil cylinder, or a linear guide rail.

In some embodiments, the first pushing member 20 includes a roller. The second pushing member 101 pushes the first pushing member 20 to move, and the roller can rotate, which can reduce the friction between the second pushing member 101 and the roller.

In some embodiments, the second pushing member 101 includes a rod-like member.

In some embodiments, the second pushing member 101 includes an inclined surface 1011, which includes a start end 1012 where an inclination starts and an end point end 1013 where the inclination ends, and the inclined surface 1011 is configured to abut against the first pushing member 20 in a direction from the start end 1012 to the end point end 1013 so as to push the first pushing member 20 to move in a direction away from the first limiting member 81.

The start end 1012 of the inclined surface 1011 has a small size in a direction from the first limiting member 81 to the second limiting member 82, and the end point end 1013 of the inclined surface 1011 has a large size in a direction from the first limiting member 81 to the second limiting member 82. The second pushing member 101 extends out in a direction from the end point end 1013 to the start end 1012, and the inclined surface 1011 makes contact with the first pushing member 20 in a direction from the start end 1012 to the end point end 1013, and can push the first pushing member 20 to move in the direction away from the first limiting member 81.

The second pushing member 101 retreats in the direction from the start end 1012 to the end point end 1013, and the inclined surface 1011 makes contact with the first pushing member 20 in the direction from the end point end 1013 to the start end 1012, and a pushing force of the second pushing member 101 on the first pushing member 20 decreases until there is no pushing force on the first pushing member 20.

In some embodiments, the direction from the start end 1012 to the end point end 1013 of the inclined surface 1011 is parallel to the first direction X.

The start end 1012 of the inclined surface 1011 has a small size in the second direction Y, and the end point end 1013 of the inclined surface 1011 has a large size in the second direction Y.

In some embodiments, the palletizing and transferring apparatus further includes a reset member 9, the reset member 9 is connected to the second limiting member 82, and the reset member 9 is configured to provide an acting force that causes the second limiting member 82 to move toward the first limiting member 81.

When the pushing force of the second pushing member 101 on the first pushing member 20 disappears, the second limiting member 82 moves toward the first limiting member 81 under the acting force of the reset member 9, thereby realizing the limiting of the second limiting member 82 and the first limiting member 81.

In some embodiments, the reset member 9 includes an elastic member. Optionally, the elastic member includes a spring, etc.

Referring to FIG. 5, in some embodiments, the palletizing and transferring apparatus further includes a mounting plate 30 provided with the first power assembly 4 and the third power assembly 10.

The palletizing and transferring apparatus further includes a second power assembly 6, connected to the mounting plate 30 in a driving mode so as to cause the mounting plate 30 to move toward or away from the support plate 1.

The second power assembly 6 drives the mounting plate 30 to move toward or away from the support plate 1, with a high degree of automation, and the mounting plate 30 is provided with the first power assembly 4 and the third power assembly 10. The mounting plate 30 can simultaneously drive the first power assembly 4 and the third power assembly 10 to move toward the support plate 1, which is used to realize the connection between the first power assembly 4 and the first transmission member 5, and realize that the third power assembly 10 provides power, so that the second pushing member 101 pushes the first pushing member 20, the second limiting member 82 and the first limiting member 81 are released from limiting, and the first power assembly 4 can normally drive the first transmission member 5 to move.

When the first power assembly 4 stops working, the third power assembly 10 provides power to drive the second pushing member 101 away from the first pushing member 20, the driving force on the first pushing member 20 disappears, and the second limiting member 82 is reset, and is limited with the first limiting member 81. The mounting plate 30 can simultaneously drive the first power assembly 4 and the third power assembly 10 away from the support plate 1, so that the first power assembly 4 is disconnected from the first transmission member 5, and the second 1 can carry the object to be palletized 200 for transferring.

Referring to FIG. 9, in some embodiments, the third power assembly 10 further includes a third power member 10a, a slider 102, and a third guide rail 103. The slider 102 is slidably arranged on the third guide rail 103. The third power member 10a is connected to the slider 102 in a driving mode. The third power member 10a is configured to drive the slider 102 to move along the third guide rail 103. A first end of the second pushing member 101 is connected to the slider 102, and a second end of the second pushing member 101 extends toward the support plate 1.

An extending direction of the third guide rail 103 is parallel to the first direction X.

In some embodiments, the second end of the second pushing member 101 is provided with the inclined surface 1011.

Referring to FIG. 2 to FIG. 4, in some embodiments, two sides of the first abutting member 2 are each provided with one second abutting member 3.

The first abutting member 2 can abut against and fix, together with the second abutting member 3 on one side thereof, a group of objects to be palletized 200, and the first abutting member 2 can also abut against and fix, together with the second abutting member 3 on the other side thereof, another group of objects to be palletized 200, which can simplify a structure, increase the palletized number of objects to be palletized 200, and improve the transferring efficiency.

In some embodiments, two sides of the first abutting member 2 in the second direction Y are each provided with one second abutting member 3.

In some embodiments, the palletizing and transferring apparatus further includes a third abutting member 40, arranged on the support plate 1 and configured to abut against a third side of the object to be palletized 200.

The palletizing and transferring apparatus further includes a fourth abutting member 50, movably arranged on the support plate 1 and configured to abut against a fourth side of the object to be palletized 200.

The palletizing and transferring apparatus further includes a fourth power assembly 70, configured to drive the fourth abutting member 50 to move so as to adjust spacing between the fourth abutting member 50 and the third abutting member 40.

The fourth abutting member 50 is movably arranged on the support plate 1, and the distance between the fourth abutting member 50 and the third abutting member 40 can be adjusted, so that it is suitable for abutting against and fixing objects to be palletized 200 of different models and specifications. Furthermore, by adjusting the spacing between the fourth abutting member 50 and the third abutting member 40 through the fourth power assembly 70, the object to be palletized 200 can be automatically fixed, thereby improving the transferring efficiency.

When it is necessary to palletize and transfer the object to be palletized 200, the object to be palletized 200 is placed on the support plate 1, and the first abutting member 2 abuts against the first side of the object to be palletized 200. The spacing between the second abutting member 3 and the first abutting member 2 is adjusted by the first power assembly 4, so that the second abutting member 3 abuts against the second side of the object to be palletized 200. The third abutting member 40 abuts against the third side of the object to be palletized 200, and the spacing between the fourth abutting member 50 and the third abutting member 40 is adjusted by the fourth power assembly 70 to abut against the fourth side of the object to be palletized 200, which enables to abut against and fix a plurality of side surfaces of the object to be palletized 200 to improve the stability of the object to be palletized 200.

In some embodiments, the first power assembly 70 is operably connected to the fourth abutting member 50.

In some embodiments, a direction from the third abutting member 40 to the fourth abutting member 50 is parallel to the second direction Y.

In some embodiments, the fourth abutting member 50 is movably arranged on the first abutting member 2, and the fourth abutting member 50 is configured to abut against fourth sides of objects to be palletized 200 placed on two sides of the first abutting member 2.

A third abutting member 40 is arranged on the first abutting member 2 and one end of the second abutting member 3 on one side thereof. A third abutting member 40 is also arranged on the first abutting member 2 and one end of the second abutting member 3 on the other side thereof. The fourth abutting member 50 can abut against the fourth sides of the objects to be palletized 200 placed on two sides of the first abutting member 2. The structure is simple and compact, the operation is convenient, and the transferring efficiency is improved.

In some embodiments, the fourth abutting member 50 is arranged above the first abutting member 2 in a spanning mode.

In some embodiments, the fourth power assembly 70 has the same or similar structure as the first power assembly 4.

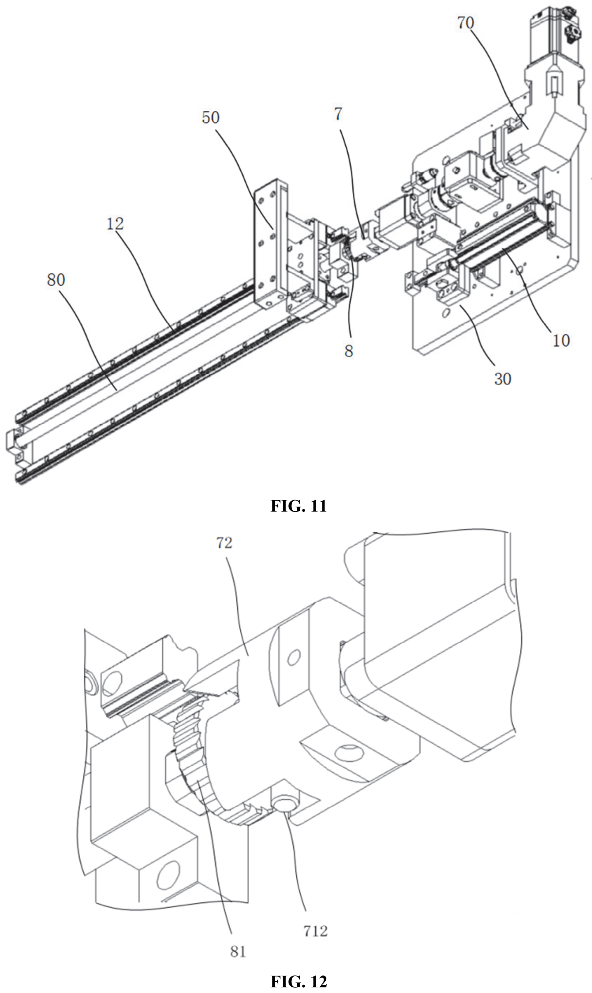

Referring to FIG. 11, in some embodiments, the palletizing and transferring apparatus further includes a second transmission member 80, which is configured to be connected to the fourth power assembly 70 to transmit the power provided by the fourth power assembly 70 to the fourth abutting member 50.

In some embodiments, the second transmission member 80 and the first transmission member 5 have the same or similar structures.

In some embodiments, the second transmission member 80 includes a lead screw. Optionally, the lead screw includes a trapezoidal lead screw.

In some embodiments, the palletizing and transferring apparatus further includes a second guide rail 12, and the fourth power assembly 70 is slidably arranged on the second guide rail 12. The movement of the fourth abutting member 50 is guided by the second guide rail 12.

Two sides of the second transmission member 80 are each provided one second guide rail 12.

In some embodiments, the second guide rail 12 includes a linear guide rail.

Referring to FIG. 11, in some embodiments, the fourth power assembly 70 may also be connected to the fourth abutting member 50 via a connecting assembly 7.

Referring to FIG. 12, similarly, the connecting assembly 7 includes a first joint 71. The first joint 71 includes a connecting member 711 and an extending member 712. The connecting member 711 is connected to the second transmission member 80, and the extending member 712 is connected to the connecting member 711 and extends toward the outside of the connecting member 711.

The connecting assembly 7 includes a second joint 72. The second joint 72 is connected to the fourth power assembly 70. The second joint 72 includes an accommodating cavity 722 formed by a circumferential side wall 721 in a surrounded mode and configured to accommodate the connecting member 711, and the circumferential side wall 721 is provided with an accommodating groove 723 for accommodating the extending member 712.

In some embodiments, the fourth power assembly 70 may also be limited by the limiting assembly 8.

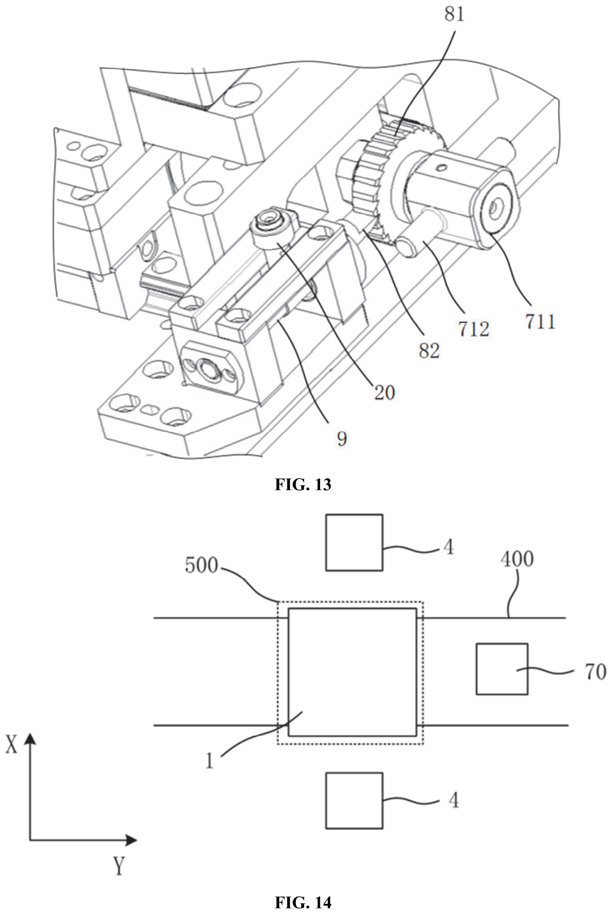

Referring to FIG. 13, similarly, the limiting assembly 8 includes a first limiting member 81 and a second limiting member 82, and the first limiting member 81 is arranged on the fourth power assembly 70. The second limiting member 82 is movably arranged relative to the first limiting member 81, the second limiting member 82 is configured to move toward the first limiting member 81 to limit the first limiting member 81, or move away from the first limiting member 81 to release limiting on the first limiting member 81.

Similarly, the second limiting member 82 can also be driven to move by the third power assembly 10. The fourth power assembly 70 and the third power assembly 10 are borne by the mounting plate 30.

Referring to FIG. 5, in some embodiments, the palletizing and transferring apparatus further includes a bottom plate 60, and the second power assembly 6 is arranged on the bottom plate 60. The mounting plate 30 is movably arranged on the bottom plate 60. The second power assembly 6 is connected to the mounting plate 30 in a driving mode. The first power assembly 4 and the third power assembly 10 are arranged on the mounting plate 30.

In some embodiments, the palletizing and transferring apparatus further includes a controller, which is electrically connected to the first power assembly 4, the second power assembly 6 and the third power assembly 10.

Some embodiments further provide a battery production system, including the palletizing and transferring apparatus in any of the above embodiments.

The battery production system includes the palletizing and transferring apparatus in any of the above embodiments, and accordingly has beneficial effects of the palletizing and transferring apparatus.

In some embodiments, the battery production system further includes a conveyor line 400, which is configured to convey the support plate 1.

The battery production system further includes a loading station 500, arranged on the conveyor line 400, and the loading station 500 is laterally provided with a first power assembly 4.

An extending direction of the conveying line 400 is parallel to a second direction Y.

The first power assembly 4 is located on one side of the second direction Y of the loading station 500. A direction in which the first power assembly 4 moves toward the loading station 500 is parallel to a first direction X.

The support plate 1 is conveyed through the conveyor line 400. After the support plate 1 arrives at the loading station 500, the object to be palletized 200 is placed on the support plate 1, and the first abutting member 2 is configured to abut against the first side of the object to be palletized 200. The spacing between the second abutting member 3 and the first abutting member 2 is adjusted by the first power assembly 4, so that the second abutting member 3 abuts against the second side of the object to be palletized 200. This can automatically fix the object to be palletized 200 and improve the transferring efficiency. After the object to be palletized 200 is fixed, the first power assembly 4 moves away from the support plate 1, and the support plate 1 carries the object to be palletized 200 and is conveyed to a next process through the conveyor line 400.

In some embodiments, the palletizing and transferring apparatus further includes a third abutting member 40, arranged on the support plate 1 and configured to abut against a third side of the object to be palletized 200.

The palletizing and transferring apparatus further includes a fourth abutting member 50, movably arranged on the support plate 1 and configured to abut against a fourth side of the object to be palletized 200.

The palletizing and transferring apparatus further includes a fourth power assembly 70, configured to drive the fourth abutting member 50 to move so as to adjust spacing between the fourth abutting member 50 and the third abutting member 40.

The first power assembly 4 is arranged on one side of a conveying direction of the conveyor line 400, the fourth power assembly 70 is located in the conveying direction of the conveyor line 400, and the fourth power assembly 70 is arranged in a rising and falling mode relative to the conveyor line 400.

A direction from the fourth power assembly 70 to the support plate 1 is parallel to the second direction Y.

The fourth power assembly 70 is arranged in the rising and falling mode relative to the conveyor line 400. During a process that the conveyor line 400 conveys the support plate 1, the fourth power assembly 70 rises above the conveyor line 400 to avoid interfering with the operation of the support plate 1. After the support plate 1 arrives at the loading station 500, the fourth power assembly 70 falls to the conveyor line 400 to drive and adjust the fourth abutting member 50.

In some embodiments, a rising and falling direction of the fourth power assembly 70 relative to the conveyor line 400 is parallel to a third direction Z.

The third direction Z intersects the first direction X and the second direction Y respectively. Optionally, the third direction Z is perpendicular to the first direction X and the second direction Y respectively.

In some embodiments, the object to be palletized 200 includes a battery module 200a or a battery 100.

The palletizing and transferring apparatus can be applied to different objects to be palletized.

Some embodiments further provide a palletizing method for a palletizing and transferring apparatus, including the following steps:
placing an object to be palletized 200 on a support plate 1;
abutting against a first side of the object to be palletized 200 by a first abutting member 2; and
driving a second abutting member 3 to move by a first power assembly 4 so as to adjust spacing between the second abutting member 3 and first abutting member 2, so that the second abutting member 3 abuts against a second side of the object to be palletized 200.

When it is necessary to palletize and transfer the object to be palletized 200, the object to be palletized 200 is placed on the support plate 1, and the first abutting member 2 abuts against the first side of the object to be palletized 200. The spacing between the second abutting member 3 and the first abutting member 2 is adjusted by the first power assembly 4, so that the second abutting member 3 abuts against the second side of the object to be palletized 200 to fix the object to be palletized 200 and prevent the object to be palletized 200 from colliding, deforming, falling off, etc. during a palletizing and transferring process. Furthermore, by adjusting the spacing between the second abutting member 3 and the first abutting member 2 through the first power assembly 4, the object to be palletized 200 can be automatically fixed, thereby improving the transferring efficiency.

In some embodiments, adjusting the spacing between the second abutting member 3 and the first abutting member 2 by the first power assembly 4 includes:
driving the first power assembly 4 to move toward a first transmission member 5 by a second power assembly 6, so that the first power assembly 4 is connected to the first transmission member 5; and
transmitting power provided by the first power assembly 4 to the second abutting member 3 by the first transmission member 5, so that the second abutting member 3 moves.

When the spacing between the second abutting member 3 and the first abutting member 2 needs to be adjusted, the first power assembly 4 is connected to the first transmission member 5. The first transmission member 5 transmits the power provided by the first power assembly 4 to the second abutting member 3 to cause the second abutting member 3 to move, thereby achieving the purpose of adjusting the distance between the second abutting member 3 and the first abutting member 2 and realizing the fixation of the object to be palletized 200.

When the object to be palletized 200 is fixed, or in other cases where there is no need to adjust the spacing between the second abutting member 3 and the first abutting member 2, the connection between the first power assembly 4 and the first transmission member 5 is released. This can not only prevent the first power assembly 4 from being operated incorrectly to cause the first transmission member 5 to move, but also facilitate the support plate 1 carrying the object to be palletized 200 for transferring without the need for the first power assembly 4 to follow the support plate 1 for transferring.

In some embodiments, the palletizing method for the palletizing and transferring apparatus further includes:
driving the first power assembly 4 to move in a direction away from the first transmission member 5 by the second power assembly 6, so that the first power assembly 4 is disconnected from the first transmission member 5; and
limiting a movement of the first transmission member 5 by a limiting assembly 8.

In some embodiments, the palletizing method for the palletizing and transferring apparatus further includes: operating the limiting assembly 8 to release a limitation on the first transmission member 5 when the first power assembly 4 is connected to the first transmission member 5.

After the first transmission member 5 is disconnected from the first power assembly 4, the movement of the first transmission member 5 is limited by the limiting assembly 8, which can prevent the first transmission member 5 from driving the second abutting member 3 to move, causing the second abutting member 3 to be unable to effectively abut against and limit the object to be palletized 200, causing the object to be palletized 200 to shake, collide or fall off, etc.

After the first transmission member 5 is connected to the first power assembly 4, the limitation on the first transmission member 5 is released by the limiting assembly 8, so that the first power assembly 4 can normally drive the first transmission member 5 to move.

In some specific embodiments, the transmission members of the second abutting member 3 and the fourth abutting member 50 of the palletizing and transferring apparatus both include lead screws and are guided by guiderails. Every time the model of the object to be palletized transferred by the palletizing and transferring apparatus is changed, it is only necessary to input parameters on a touch screen of the controller, and an air cylinder of the second power assembly 6 extends out to drive the mounting plate 30 to move toward the support plate 1. The first power assembly 4 is connected to the first transmission member 5 through the connecting assembly 7, and the third power assembly 10 provides power to enable a second pushing member 101 to push a first pushing member 20 to move, so that the second limiting member 82 moves away from the first limiting member 81, thereby releasing the limiting on the first transmission member 5. The servo motor 411 of the first power assembly 4 rotates to drive the lead screw to move, realizing parametric automatic model change. After completion, the air cylinder of the second power assembly 6 retracts, and the second limiting member 82 of the limiting assembly 8 moves toward the first limiting member 81 under the action of the reset member 9. A limiting plate 821 is inserted into a tooth groove of the ratchet811 to prevent the lead screw from rotating. The embodiment of the palletizing and transferring apparatus provided in the present application can quickly realize the change of the model of the object to be palletized by only modifying the parameters on the touch screen of the controller, thereby reducing labor costs and shortening a cutting and pulling cycle.

In some specific embodiments, a method for adjusting the distance between the first abutting member 2 and the second abutting member 3 of the palletizing and transferring apparatus is as follows:
the servo motor 411 is powered on to start the movement and rotate the motor;
the servo motor 411 drives the lead screw to rotate through the connecting assembly 7, thereby realizing the movement of the second abutting member 3 relative to the first abutting member 2;
the lead screw transmits the power provided by the servo motor 411 to make the second abutting member 3 slide along the first guide rail 11;
under the sliding guidance of the first guide rail 11, the second abutting member 3 moves relative to the first abutting member 2 to realize a position distance change; and
after the second abutting member 3 completes the distance change, the limiting plate 821 of the limiting assembly 8 is inserted into the tooth groove of the ratchet 811 to act as a brake to prevent the position of the second abutting member 3 from changing.

Similarly, the position adjustment of the fourth abutting member 50 can also adopt an adjustment principle similar to the distance changing action of the second abutting member 3. Each time models of objects to be palletized with different sizes are changed, the servo automatic distance change of the palletizing and transferring apparatus is realized to automatically accommodate the product size differences.

During distance changes of both the second abutting member 3 and the fourth abutting member 50, the object to be palletized can be clamped in the first direction X and the second direction Y by the servo motor, thereby realizing automatic parametric distance changes.

While the present application has been described with reference to the preferred examples, various modifications may be made and components thereof may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A palletizing and transferring apparatus, comprising:
a support plate (1);
a first abutting member (2), arranged on the support plate (1) and configured to abut against a first side of an object to be palletized (200);
a second abutting member (3), movably arranged on the support plate (1) and configured to abut against a second side of the object to be palletized (200); and
a first power assembly (4), configured to drive the second abutting member (3) to move so as to adjust spacing between the second abutting member (3) and the first abutting member (2).

2. The palletizing and transferring apparatus according to claim 1, further comprising a first transmission member (5) arranged on the support plate (1), wherein the first transmission member (5) is detachably connected to the first power assembly (4) and configured to transmit power provided by the first power assembly (4) to the second abutting member (3) to cause the second abutting member (3) to move.

3. The palletizing and transferring apparatus according to claim 2, further comprising a second power assembly (6), which is connected to the first power assembly (4) in a driving mode so as to cause the first power assembly (4) to move toward or away from the first transmission member (5).

4. The palletizing and transferring apparatus according to claim 2 or 3, further comprising a connecting assembly (7), wherein the connecting assembly (7) is configured to realize a connection or disconnection between the first transmission member (5) and the first power assembly (4).

5. The palletizing and transferring apparatus according to claim 4, wherein the connecting assembly (7) comprises:
a first joint (71), comprising a connecting member (711) and an extending member (712), wherein the connecting member (711) is connected to the first transmission member (5), and the extending member (712) is connected to the connecting member (711) and extends toward an outside of the connecting member (711); and
a second joint (72), connected to the first power assembly (4), wherein the second joint (72) comprises an accommodating cavity (722) formed by a circumferential side wall (721) in a surrounded mode and configured to accommodate the connecting member (711), the circumferential side wall (721) comprising an accommodating groove (723) for accommodating the extending member (712).

6. The palletizing and transferring apparatus according to any one of claims 2 to 5, further comprising a limiting assembly (8), wherein the limiting assembly (8) is configured to limit a movement of the first transmission member (5) when the first transmission member (5) is disconnected from the first power assembly (4), and to release a limitation on the first transmission member (5) after the first transmission member (5) is connected to the first power assembly (4).

7. The palletizing and transferring apparatus according to claim 6, wherein the limiting assembly (8) comprises:
a first limiting member (81), arranged on the first transmission member (5); and
a second limiting member (82), movably arranged relative to the first limiting member (81), wherein the second limiting member (82) is configured to move toward the first limiting member (81) to limit the first limiting member (81), or move away from the first limiting member (81) to release limiting on the first limiting member (81).

8. The palletizing and transferring apparatus according to claim 7, wherein the first limiting member (81) comprises a ratchet (811).

9. The palletizing and transferring apparatus according to claim 8, wherein the second limiting member (82) comprises a limiting plate (821), wherein the limiting plate (821) is configured to move toward the ratchet (811) and be inserted into a tooth groove of the ratchet (811).

10. The palletizing and transferring apparatus according to any one of claims 7 to 9, further comprising a reset member (9), wherein the reset member (9) is connected to the second limiting member (82) and configured to provide an acting force that causes the second limiting member (82) to move toward the first limiting member (81).

11. The palletizing and transferring apparatus according to any one of claims 7 to 10, further comprising a third power assembly (10), wherein the third power assembly (10) is configured to drive the second limiting member (82) to move.

12. The palletizing and transferring apparatus according to claim 11, further comprising a first pushing member (20) arranged on the second limiting member (82), wherein the third power assembly (10) comprises a second pushing member (101), the second pushing member (101) being configured to push the first pushing member (20) to move so as to drive the second limiting member (82) away from the first limiting member (81).

13. The palletizing and transferring apparatus according to claim 12, wherein the second pushing member (101) comprises an inclined surface (1011), which comprises a start end (1012) where an inclination starts and an end point end (1013) where the inclination ends, wherein the inclined surface (1011) is configured to abut against the first pushing member (20) in a direction from the start end (1012) to the end point end (1013) so as to push the first pushing member (20) to move in a direction away from the first limiting member (81).

14. The palletizing and transferring apparatus according to any one of claims 11 to 13, further comprising a reset member (9), wherein the reset member (9) is connected to the second limiting member (82) and configured to provide an acting force that causes the second limiting member (82) to move toward the first limiting member (81).

15. The palletizing and transferring apparatus according to any one of claims 11 to 14, further comprising:
a mounting plate (30), provided with the first power assembly (4) and the third power assembly (10); and
a second power assembly (6), connected to the mounting plate (30) in a driving mode so as to cause the mounting plate (30) to move toward or away from the support plate (1).

16. The palletizing and transferring apparatus according to any one of claims 1 to 15, wherein two sides of the first abutting member (2) are each provided with one second abutting member (3).

17. The palletizing and transferring apparatus according to any one of claims 1 to 16, further comprising:
a third abutting member (40), arranged on the support plate (1) and configured to abut against a third side of the object to be palletized (200);
a fourth abutting member (50), movably arranged on the support plate (1) and configured to abut against a fourth side of the object to be palletized (200); and
a fourth power assembly (70), configured to drive the fourth abutting member (50) to move so as to adjust spacing between the fourth abutting member (50) and the third abutting member (40).

18. The palletizing and transferring apparatus according to claim 17, wherein the fourth abutting member (50) is movably arranged on the first abutting member (2) and configured to abut against fourth sides of objects to be palletized (200) placed on two sides of the first abutting member (2).

19. A battery production system, comprising the palletizing and transferring apparatus according to any one of claims 1 to 18.

20. The battery production system according to claim 19, further comprising:
a conveyor line (400), configured to convey the support plate (1); and
a loading station (500), arranged on the conveyor line (400), wherein the loading station (500) is laterally provided with the first power assembly (4).

21. The battery production system according to claim 20, wherein the palletizing and transferring apparatus further comprises:
a third abutting member (40), arranged on the support plate (1) and configured to abut against a third side of the object to be palletized (200);
a fourth abutting member (50), movably arranged on the support plate (1) and configured to abut against a fourth side of the object to be palletized (200); and
a fourth power assembly (70), configured to drive the fourth abutting member (50) to move so as to adjust spacing between the fourth abutting member (50) and the third abutting member (40),
wherein the first power assembly (4) is arranged on one side of the conveyor line (400), the fourth power assembly (70) is located in a conveying direction of the conveyor line (400), and the fourth power assembly (70) is arranged in a rising and falling mode relative to the conveyor line (400).

22. The battery production system according to any one of claims 19 to 21, wherein the object to be palletized (200) comprises a battery module (200a) or a battery (100).

23. A palletizing method for a palletizing and transferring apparatus, comprising the following steps:
placing an object to be palletized (200) on a support plate (1);
abutting against a first side of the object to be palletized (200) by a first abutting member (2); and
driving a second abutting member (3) to move by a first power assembly (4) so as to adjust spacing between the second abutting member (3) and the first abutting member (2), so that the second abutting member (3) abuts against a second side of the object to be palletized (200).

24. The palletizing method for the palletizing and transferring apparatus according to claim 23, wherein adjusting the spacing between the second abutting member (3) and the first abutting member (2) by the first power assembly (4) comprises:
driving the first power assembly (4) to move toward a first transmission member (5) by a second power assembly (6), so that the first power assembly (4) is connected to the first transmission member (5); and
transmitting power provided by the first power assembly (4) to the second abutting member (3) by the first transmission member (5), so that the second abutting member (3) moves.

25. The palletizing method for the palletizing and transferring apparatus according to claim 24, further comprising:
driving the first power assembly (4) to move in a direction away from the first transmission member (5) by the second power assembly (6), so that the first power assembly (4) is disconnected from the first transmission member (5), and limiting a movement of the first transmission member (5) by a limiting assembly (8); and
operating the limiting assembly (8) to release a limitation on the first transmission member (5) when the first power assembly (4) is connected to the first transmission member (5).
